# EUROPEAN PATENT SPECIFICATION

(11) **EP 3 814 418 B1**
(45) Date of publication and mention of the grant of the patent: **15.04.2026**
(21) Application number: 19732389.2
(22) Date of filing: 26.06.2019
(51) Int. Cl.: C08L 9/00, C08F 220/56, C08F 220/58, C08F 220/60, C08F 279/02, C08L 9/06, C08L 33/02, C08L 51/04

(54) **RUBBER COMPOSITION FOR TIRES WITH GOOD WET GRIP AND ROLLING RESISTANCE PROPERTIES**
KAUTSCHUKZUSAMMENSETZUNG FÜR REIFEN MIT GUTEN NASSHAFTUNGS- UND ROLLWIDERSTANDSEIGENSCHAFTEN
COMPOSITION DE CAOUTCHOUC POUR PNEUS PRÉSENTANT DE BONNES PROPRIÉTÉS D'ADHÉRENCE SUR SOL MOUILLÉ ET DE RÉSISTANCE AU ROULEMENT

(30) Priority: 29.06.2018 LU 100867
(43) Date of publication of application: 05.05.2021
(73) Proprietor: Apollo Tyres Global R&D B.V., 7521 PT Enschede (NL)
(72) Inventor: VERWEY, Lehani, 7545 GB Enschede (NL); VANCSO, Gyula Julius, 7552 GN Hengelo (NL); REUVEKAMP, Louis, 7546 GE Enschede (NL); SCHULTZ, Steven M., 7523 EK Enschede (NL)
(74) Representative: Michalski Hüttermann & Partner Patentanwälte mbB
(86) International application number: PCT/EP2019/067021
(87) International publication number: WO 2020/002439

(56) References cited:
- EP-A1- 2 735 451
- EP-A1- 2 803 683
- US-A1- 2013 165 579
- US-A1- 2013 165 587
- US-A1- 2013 165 588
- US-B1- 8 563 656

## Description

The present invention relates to a cross-linkable rubber composition comprising a first rubber component and a grafted rubber, a method of preparing a cross-linkable rubber composition comprising a first rubber component and a grafted rubber, a cross-linked rubber composition obtained by cross-linking such a rubber composition, a method of preparing a tire tread and a tire.

Tread rubber is one of the important portions of a pneumatic tire which contributes enormously to the overall performance of a tire. A tire has to perform well in severe weather conditions and it has to exhibit a variety of performances such as wet grip, abrasion resistance and low rolling resistance. It is well known in rubber compounding that there is a trade-off between wet grip and rolling resistance. For low rolling resistance, the rubber must show elastic behavior and have low hysteresis. For proper contact with the road surface to deliver wet grip performance, the material must have high hysteresis and be non-elastic.

The classic approach of mixing well-known materials for tread compounding in order to obtain a tread with the best properties in both wet grip and rolling resistance will lead to a compromise between the two. The tread compound can be optimized to exhibit good wet performance by using high T_{g} polymers but it normally results in poor rolling resistance properties.

For balancing wet properties and rolling resistance at the same time, a further approach provides a thermoresponsive polymer incorporated into a rubber matrix. A thermoresponsive polymer, incorporated into a rubber matrix, that adapts its friction level based on road conditions would provide increased safety when needed while maintaining good rolling resistance. For example, when the tire comes into contact with water, the thermoresponsive domains in the tread compound undergoes a structural change to become softer to improve wet grip performance. As the temperature increase, the thermoresponsive domains become stiffer to provide good rolling resistance. To develop a tread compound with improved wet grip and rolling resistance, the compound is expected to perform well in wide range of temperatures. In this case, a compound that exhibits a high tan δ curve (dynamic mechanical properties) at 0 °C and low tan δ at 70 °C.

In order to obtain a compound which can exhibit high tan δ curve at 0 °C and low tan δ at 70 °C, a material that responds differently at each temperature is required. A thermoresponsive polymer that can adapt its structure and properties to become softer and stiffer to benefit both wet grip and rolling resistance will create a decoupling between these two elements in tire technology.

US 8,536,266 B2 describes a pneumatic tire having a tread, which comprises a rubber composition comprising a copolymer comprising a polymeric backbone chain derived from a monomer comprising at least one conjugated diene monomer and optionally at least one vinyl aromatic monomer; and polymeric sidechains bonded to the backbone chain. The sidechains comprise a polymer capable of exhibiting a lower critical solution temperature (LCST). The contact angle for a PNIPAM-functionalized styrene-butadiene rubber measured above the LCST was relatively constant with increasing amount of PNIPAM, indicating that the functionalized polymer was relatively hydrophobic above the LCST. The contact angle for the samples measured below the LCST however showed a significant decrease in contact angle with increasing amount of PNIPAM, indicating that the functionalized polymer becomes relatively hydrophilic below the LCST.

US 8,415,432 B1 describes a vulcanizable rubber composition comprising a diene based elastomer; and a compound of formula Q-[-X-S-R]ₙ (I) where Q is an n-valent organic group of 1 or more carbon atoms and optionally one or more of nitrogen, oxygen, sulfur, halogen, silicon, and phosphorus atoms; X is a divalent polymer group capable of exhibiting a lower critical solution temperature; R is independently a hydrogen atom or a monovalent group of formula -C(=S)-Z (II) where Z is a monovalent organic group of 1 or more carbon atoms and optionally one or more of nitrogen, oxygen, sulfur, halogen, silicon, and phosphorus atoms; and n is an integer greater than or equal to 2. Further described is a rubber composition comprising of the reaction product of a diene based elastomer and a compound of formula I, and a pneumatic tire with a tread comprising the rubber composition.

US 8,883,884 B2 describes a pneumatic tire comprising at least one component, the at least one component comprising a polymer blend comprising a copolymer and an additional polymer, the copolymer comprising: a polymeric backbone chain derived from a monomer comprising at least one conjugated diene monomer and optionally at least one vinyl aromatic monomer; and polymeric sidechains bonded to the backbone chain, the sidechains comprising a polymer immiscible with the backbone; the additional polymer consisting of a polymer miscible with the polymeric sidechains.

EP 2 735 451 A1 describes a polymer blend comprising a copolymer and an additional polymer. The copolymer comprises a polymeric backbone chain derived from a monomer comprising at least one conjugated diene monomer and optionally at least one vinyl aromatic monomer, and polymeric sidechains bonded to the backbone chain, the sidechains comprising a polymer immiscible with the backbone. The additional polymer consists of a polymer miscible with the polymeric sidechains.

US 8563656 A1 describes a method of increasing the green strength of a rubber composition, comprising the step of combining in the rubber composition, a copolymer comprising: a polymeric backbone chain comprising a diene based elastomer selected from the group consisting of solution polymerized styrene butadiene rubber, emulsion polymerized styrene butadiene rubber, natural polyisoprene rubber, synthetic polyisoprene rubber, and polybutadiene; and polymeric sidechains bonded to the backbone chain, the sidechains comprising a polymer derived from an N-substituted monoalkyl acrylamide.

US 2013/165587 A1 describes a copolymer comprising: a polymeric backbone chain derived from a monomer comprising at least one conjugated diene monomer and optionally at least one vinyl aromatic monomer; and polymeric sidechains bonded to the backbone chain, the sidechains comprising a polymer capable of exhibiting a lower critical solution temperature (LCST).

US 2013/165579 A1 describes a pneumatic tire having a tread, the tread comprising a rubber composition comprising: a copolymer comprising a polymeric backbone chain derived from a monomer comprising at least one conjugated diene monomer and optionally at least one vinyl aromatic monomer; and polymeric sidechains bonded to the backbone chain, the sidechains comprising a polymer capable of exhibiting a lower critical solution temperature (LCST); optionally, at least one additional diene based elastomer; and a filler selected from the group consisting of carbon black and silica.

US 2013/165588 A1 describes a method of making a graft copolymer, comprising the steps of obtaining a first polymer comprising at least one carbon-carbon double bond, the first polymer derived from at least one first monomer, the at least one first monomer comprising a conjugated diene monomer; obtaining a second polymer, the second polymer capable of exhibiting a lower critical solution temperature (LCST) and comprising a terminal functional group capable of reacting with the carbon-carbon double bond; a reacting the second polymer with the first polymer to form a graft copolymer, the graft copolymer comprising a backbone derived from the first polymer and sidechains derived from the second polymer.

Optimizing the tread compound for wet grip normally results in trade-off in rolling resistance performance. The present invention has the object to provide a cross linkable rubber composition to be used in a tire tread to serve well in very wide range of temperatures for both wet and rolling resistance.

The object is achieved by a cross-linkable rubber composition according to claim 1, a method of preparing a cross-linkable rubber composition according to claim 8, a cross-linked rubber composition according to claim 9, a method for preparing a tire according to claim 11 and a tire according to claim 12. Advantageous embodiments are the subject of the dependent claims. They may be combined freely unless the context clearly indicates otherwise.

Accordingly, a cross-linkable rubber composition is provided, the cross linkable rubber composition comprising a first rubber component and ≥ 5 phr to ≤ 75 phr of a grafted rubber, the grafted rubber comprising a backbone derived from a second rubber component and sidechains derived from a polymer being capable of exhibiting lower critical solution temperature (LCST) properties, wherein the grafted rubber comprises the polymer in a range of ≥ 12 wt-% to ≤ 15 wt-%, based on a total weight of 100 wt-% of the grafted rubber.

It has surprisingly been found that the incorporation of the grafted rubber comprising 12 to 15 wt-% LCST-polymer into the matrix of the first rubber provides a tyre tread with improved wet grip and minimal loss wear and rolling resistance. This grafted rubber offers vast potential for an improvement in wet grip and rolling resistance performance due to the alteration of the structure at different temperatures. The grafted rubber has thermoresponsive properties and therefore is also denoted thermoresponsive rubber. The terms grafted rubber and thermoresponsive rubber are used interchangeably in the present invention.

The first rubber component may be selected from the group of solution polymerized styrene-butadiene rubber (SSBR), polybutadiene rubber (BR), or a mixture thereof. A commercially available BR is Neodymium Butadiene Rubber sold by Arlanxeo, e.g. BUNA^{®} CB 24

The second rubber component may be selected from the group of styrene-butadiene rubber (SBR), solution polymerized styrene-butadiene rubber (SSBR), emulsion polymerized styrene-butadiene rubber (ESBR), styrene-isoprene-styrene (SIS) rubber, polyisoprene (IR) rubber, natural polyisoprene rubber (NR), synthetic polybutadiene rubber (BR) or a mixture thereof. Preferably, the rubber is manufactured by the solution process (SSBR or solution SBR). The rubber component comprises at least one olefinic carbon-carbon double bond. The vinyl groups along the backbone of the second rubber component allow to covalently bind an LCST-capable polymer such as PNIPAM to.

The first and/or the second rubber component, preferably a solution polymerization prepared SSBR may have a styrene content in a range of ≥ 5 weight-% to ≤ 50 weight-%, preferably in a range of ≥ 10 weight-% to ≤ 35 weight-%, based on a total weight of 100 weight-%. The SSBR may have a vinyl content in a range of ≥ 30 weight-% to ≤ 80 weight-%, preferably in a range of ≥ 50 weight-% to ≤ 70 weight-%, based on a total weight of 100 weight-%.

If not specifically denoted otherwise, given % are weight-%. Weight percent, weight-% or wt-%, are synonyms and are calculated on the basis of a total weight of 100 weight% of the respective object, if not otherwise stated. The total amount of all components of the respective object does not exceed 100 wt.-%.

The first and/or the second second rubber component may have a glass transition temperature T_{g} of ≥ -30 °C. The glass transition temperature T_{g} is measured by DSC, according to ISO 22768. This norm specifies a heating rate of 20 °C/min. Preferably the glass transition temperature T_{g} is ≥ -25 °C.

Commercial available SSBR are S-SBR type sold by Sprintan under the Sprintan SLR name, e.g. Sprintan^{®} SLR 4601. The S-SBR can be conveniently prepared, for example, by anionic batch polymerization.

The first rubber component and the second rubber component may be the same or different rubbers, for example SSBR or BR. SSBR and BR advantageously provide good compatibility with the grafted rubber, particularly with a grafted SBR or SSBR rubber. In an embodiment, the first rubber component may be BR and the second rubber component may be SSBR.

The polymer being capable of exhibiting a lower critical solution temperature (LCST) may include homopolymers and copolymers of various monomers known to have LCST properties. By "capable of exhibiting a lower critical solution temperature (LCST)" it is meant that in the presence of water, the polymer associates with the water to form a water-swollen polymer phase, wherein the water-swollen polymer phase will show an LCST transition when heated from a temperature below the LCST to a temperature above the LCST. In other words, the polymer structure and properties are capable to change at different temperatures. The polymer is capable of exhibiting an LCST when the polymer exists as a side chain on the grafted rubber.

The LCST-capable polymer comprises a terminal functional thiol group. Such a terminal functional group is capable of reacting with an olefinic carbon-carbon double bond of the rubber component by a radical thiol-ene reaction.

The LCST-capable polymer may be selected from the group of acrylamides and substituted acrylamides, methacrylamides and substituted methacrylamides, acrylic acids and substituted acrylic acids, methacrylic acids and substituted methacrylic acids, caprolactams and substituted carbolactams, alkyl ethers and substituted alkyl ethers. In an embodiment, the polymer is selected from the group of poly(N-isopropylacrylamide), poly(N-cyclopropylacrylamide), poly(N,N-diethylacrylamide) and mixtures of these polymers. Preferably, the polymer is poly(N-isopropylacrylamide) (PNIPAM).

According to a preferred embodiment of the present invention the second rubber component is SSBR and the polymer is poly(N-isopropylacrylamide) (PNIPAM). A preferred grafted rubber thus comprises poly(N-isopropylacrylamide) covalently coupled to the vinyl groups of SSBR.

According to one embodiment of the present invention, the composition comprises, per hundred parts by weight of rubber (phr), ≥ 5 phr to ≤ 75 phr, preferably ≥ 25 phr to ≤ 75 phr, of the first rubber component.

According to one embodiment of the present invention, the composition comprises ≥ 25 phr to ≤ 75 phr of the grafted rubber.

The grafted rubber may be produced by a method comprising the steps of:
A) providing a rubber component comprising at least one olefinic carbon-carbon-double bond,
B) providing a polymer being capable of exhibiting lower critical solution temperature (LCST) properties and comprising a terminal functional thiol group capable of reacting with the olefinic carbon-carbon double bond of the rubber,

wherein the polymer is obtained by the steps of:
   B1) reversible addition-fragmentation chain transfer (RAFT) polymerization of a monomer comprising at least one olefinic carbon-carbon-double bond in the presence of a thiocarbonylthio RAFT agent thereby forming a polymer comprising a terminal thiocarbonylthio group, and
   B2) cleaving the terminal thiocarbonylthio group to a thiol group thereby attaining the terminal thiol functionality of the polymer, and
   C) reacting the polymer with the rubber component by a radical thiol-ene reaction thereby forming a grafted rubber, the grafted rubber comprising a backbone derived from the rubber and sidechains derived from the polymer,
wherein the polymer in a further step B3) is treated with a reducing agent before being used in the grafting reaction of step C).

According to the present invention, the grafted rubber comprises the polymer in a range of ≥ 12 wt-% to ≤ 15 wt-%, based on a total weight of 100 wt-% of the grafted rubber.

The invention also relates to a method of preparing a cross-linkable rubber composition comprising the steps of:
- providing a first rubber component;
- adding a grafted rubber, the grafted rubber comprising a backbone derived from a second rubber component and sidechains derived from a polymer being capable of exhibiting lower critical solution temperature (LCST) properties, wherein the grafted rubber comprises the polymer in a range of ≥ 10 wt-% to ≤ 15 wt-%, based on a total weight of 100 wt-% of the grafted rubber.
- adding curing agents.

Another aspect of the present invention is a cross-linked rubber composition obtained by cross-linking a rubber composition according to the invention.

In an embodiment, the cross-linked rubber composition has a tan delta at 0°C of ≥ 0.18 to ≤ 0.3 (determined from dynamic mechanical analysis (DMA) measurements according to ISO 4664-1, frequency 10 Hz, 0.1% dynamic strain) and a tan delta at 60 °C of ≥ 0.2 to ≤ 0.25 (determined from dynamic mechanical analysis (DMA) measurements according to ISO 4664-1, frequency 10 Hz, 6 % dynamic strain).

The present invention also relates to a method of preparing a tire, comprising the steps of:
- providing a tire assembly comprising a rubber composition according to the invention;
- cross-linking at least the rubber composition according to the invention in the tire assembly.

Another aspect of the invention is a tire tread obtained by a cross-linked rubber composition according to the invention.

The present invention also encompasses a tire comprising a tire tread, wherein the tire tread comprises a cross-linked rubber composition according to the invention.

### Examples of the invention

The invention will be further described with reference to the following examples, tables and figures without wishing to be limited by them.

In the figures show:

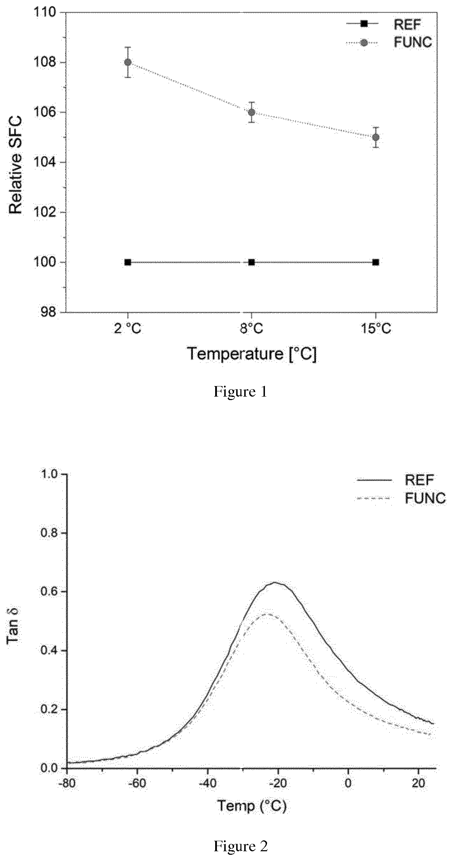

Figure 1: A graph for LAT100 depicting the relation of Relative SFC with temperature.
Figure 2: A graph of the tan δ as a function of temperature (-80 to 25°C) for the cross-linked rubber composition of the present invention as compared to a cross-linked reference composition.

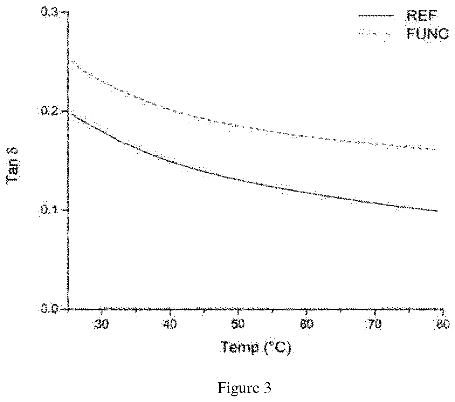

Figure 3: A graph of the tan δ as a function of temperature (30 to 80°C) for the cross-linked rubber composition of the present invention as compared to a reference composition.

In accordance with the preceding, cross-linkable rubber compositions were prepared. For the preparation of the composition according to the present invention a grafted rubber was prepared by covalently coupling poly(N-isopropyl acrylamide) to the vinyl groups of S-SBR rubber as described in Example 1, and this grafted rubber was incorporated into a rubber matrix to form a cross-linkable rubber composition according to the present invention. The cross linkable rubber composition was measured for contact angle at 25°C and 45°C, hardness and tensile strength as described in Example 2. The cross-linked composition was then tested for the rebound at 23°C and 70°C. The vulcanized tire was tested by using LAT100 and DMA test.

### Example 1:

### 1.1: Polymerization of PNIPAM

25 g of N-isopropylacrylamide (221 mmol), 0.041 g of azobisisobutyonitrile (AIBN) (0.250 mmol), 0.824 g of S-1-dodecyl-S'-(R,R'-dimethyl-R"-acetic acid)trithiocarbonate (DMP) (2.26 mmol) and 60 mL of dioxane were added to a 100 mL pear-shaped flask. The reaction mixture was degassed with argon for 90 minutes and placed in an oil bath at 70 ⁰C for 20 hours. The solution was precipitated from hexane twice, and the polymer was dried under reduced pressure overnight at room temperature to yield poly(N-isopropylacrylamide) (PNIPAM) (21,3 g, 85% yield, Mn ~ 10 000 g/mol, Ð ~ 1.23).

### 1.2: Aminolysis of PNIPAM

21.3 g of PNIPAM (2.26 mmol RAFT ends) was dissolved in 60 mL THF in a 250 mL round bottom flask. 2.29 g of Hexylamine (22.6 mmol) and 0.92 g of tributylphosphine (4.52 mmol) in a molar ratio of 1:10:2 was placed in a dropping funnel with 5 mL THF and added drop-wise to the PNIPAM solution, at room temperature, over a period of 5 minutes. The solution was stirred overnight at room temperature for complete aminolysis of the RAFT end groups. The solution was precipitated in hexane twice. A white polymer was received and dried in vacuum at 40 ⁰C for 24 hours (20.2 g, 95% yield).

### 1.3: Reduction of PNIPAM disulphides to thiol PNIPAM

20.2 g of the product of step 1.2, an aminolysed mixture of PNIPAM-S-S-PNIPAM and PNIPAM-SH (2.00 mmol), was dissolved in 30 mL DMF in a 250 mL round bottom flask. 5.7 g of Tris(2-carboxyethyl)phosphine (TCEP) (20.0 mmol) was placed in a dropping funnel with 5 mL DMF and added drop-wise to the PNIPAM mixture solution, in a molar ratio to the polymer of 10:1. The solution was stirred for 24h at room temperature and precipitated in diethyl ether to yield PNIPAM-SH (18.18 g, 90% yield).

### 1.4 Functionalisation of a styrene-butadiene rubber with PNIPAM

20 g of SBR (Sprintan SLR 4601) was dissolved in 150 mL THF for 24h in a 500mL round bottom flask to ensure complete solvation of polymer chains. 7 g of PNIPAM-SH (0.70 mmol) of step 1.3 and 0.3 g of AIBN (1.83 mmol) was added to the solution and left to stir for 30 minutes. The reaction mixture was degassed with argon for 3 hours and placed in an oil bath at 60 ⁰C for 6 hours. The solution was precipitated from methanol, and the grafted rubber was dried under reduced pressure overnight at room temperature to yield the grafted rubber product (23 g, 85% yield). The grafted rubber contained 12 wt% PNIPAM and is denoted SBR-PNIPAM.

### Example 2:

### 2.1: Polymerization of PNIPAM

25 g of N-isopropylacrylamide (221 mmol), 0.021 g of azobisisobutyonitrile (AIBN) (0.125 mmol), 0.412 g of S-1-dodecyl-S'-(R,R'-dimethyl-R"-acetic acid)trithiocarbonate (DMP) (1.33 mmol) and 60 mL of dioxane were added to a 100 mL pear-shaped flask. The reaction mixture was degassed with argon for 90 minutes and placed in an oil bath at 70 ⁰C for 20 hours. The solution was precipitated from hexane twice, and the polymer was dried under reduced pressure overnight at room temperature to yield poly(N-isopropylacrylamide) (PNIPAM) (20,8 g, 83% yield, Mn ~ 20 000 g/mol, Ð ~ 1.13).

### 2.2: Aminolysis of PNIPAM

20.8 g of PNIPAM (1.33 mmol RAFT ends) was dissolved in 60 mL THF in a 250 mL round bottom flask. 1.14 g of Hexylamine (13.3 mmol) and 0.46 g of tributylphosphine (2.26 mmol) in a molar ratio of 1:10:2 was placed in a dropping funnel with 5 mL THF and added drop-wise to the PNIPAM solution, at room temperature, over a period of 5 minutes. The solution was stirred overnight at room temperature for complete aminolysis of the RAFT end groups. The solution was precipitated in hexane twice. A white polymer was received and dried in vacuum at 40 ⁰C for 24 hours (19.6 g, 94% yield).

### 2.3: Reduction of PNIPAM disulphides to thiol PNIPAM

19.6 g of the product of step 2.2, an aminolysed mixture of PNIPAM-S-S-PNIPAM and PNIPAM-SH (1.94 mmol), was dissolved in 30 mL DMF in a 250 mL round bottom flask. 5.5 g of Tris(2-carboxyethyl)phosphine (TCEP) (19.4 mmol) was placed in a dropping funnel with 5 mL DMF and added drop-wise to the PNIPAM mixture solution, in a molar ratio to the polymer of 10:1. The solution was stirred for 24h at room temperature and precipitated in diethyl ether to yield PNIPAM-SH (17.6 g, 90% yield).

### 2.4 Functionalisation of a styrene-butadiene rubber with PNIPAM

20 g of SBR (Sprintan SLR 4601) was dissolved in 150 mL THF for 24h in a 500mL round bottom flask to ensure complete solvation of polymer chains. 7 g of PNIPAM-SH (0.70 mmol) of step 1.3 and 0.3 g of AIBN (1.83 mmol) was added to the solution and left to stir for 30 minutes. The reaction mixture was degassed with argon for 3 hours and placed in an oil bath at 60 ⁰C for 6 hours. The solution was precipitated from methanol, and the grafted rubber was dried under reduced pressure overnight at room temperature to yield the grafted rubber product (24 g, 88% yield). The grafted rubber contained 12 wt% PNIPAM and is denoted SBR-PNIPAM.

### Example 3:

The Table 1 below shows the reference composition (C1) and the cross-linkable rubber compositions according to the present invention (I1 and I2).

**Table 1: Composition of C1, I1 and I2**

| **INGREDIENT** | **Ref** (**C1**)(phr) | **Func** (**I1**) (phr) | **Func** (**I2**) (phr) |
|---|---|---|---|
| SSBR | 75 | - | - |
| SBR-PNIPAM | - | 75 | 75 |
| BR | 25 | 25 | 25 |
| Silica Filler | 90 | 80 | 80 |
| TESPT Silane | 7.2 | 6.4 | 6.4 |
| TDAE Oil | 32.5 | 32.5 | 32.5 |
| Activator 1 | 2.5 | 2.5 | 2.5 |
| Activator 2 | 1 | 1 | 1 |
| Antiozonant | 1.5 | 1.5 | 1.5 |
| Antioxidant | 2 | 2 | 2 |
| Crosslinking agent | 1.4 | 1.5 | 1.5 |
| Accelerator | 1.7 | 1.7 | 1.7 |
| Accelerator | 2 | 1.8 | 1.8 |

SSBR was a medium styrene/high vinyl micro structure with a glass transition temperature of -25°C.

SBR-PNIPAM was the thermoresponsive rubber prepared according to Example 1 and 2.

BR was a Neodymium Butadiene Rubber, not oil extended with a Mooney (1+4 @100°C) of 44.

Silica was an amorphous precipitated silica.

TESPT silane had a sulfur content of 22% and average 3.75 sulfur atoms in the sulphur chain.

TDAE oil had a viscosity of 410m²/s at 40°C and a T_{g} of -42°C.

Activator 1 was Zinc oxide from Merck and Activator 2 was Staeric acid from Merck.

Paraffin wax with 2% polyethylene and congealing point of 62-72°C was used.

6PPD (N-phenyl-N'-1,3-dimethylbutyl-p-phenylenediamine) had a melting point of 56°C.

Two accelerators were used; TBBS (N-tert-butylbenzothiazole-2-sulphenamide) with melting point of 109°C and DPG (diphenyl guanidine) with melting point between 144 and 151°C and alkalinity of 10.2 on pH scale.

Sulfur containing 1% of a mineral oil with melting point of 115°C and pH of 6.8.

Abbreviations used are: TESPT (tetrasulphide silane); TDAE (treated distillate aromatic extract; processing oil); TBBS (N-tert-butyl-2 benzothiazole sulfenamide); DPG (diphenyl guanidine); TBzTD (tetrabenzyl thiuram disulfide); 6PPD (N-1,3-dimethylbutyl)-N-phenyl-p-phenylenediamine).

### Analysis of the cross-linkable rubber composition according to the present invention:

The cross linkable rubber composition of the present invention was analyzed with respect to the reference compound on the below mentioned parameters.

Contact Angle: Static contact angle measurements were carried out on an optical contact angle device equipped with an electronic syringe unit (OCA15, Dataphysics, Germany). Five measurements were taken per sample.

Tensile test: Tensile tests were measured on the Zwick/Roell Z1.0 tensile tester according to ISO 37:2011. The crosshead speed was 500mm/min. The standardized tensile specimens S2 were cut from the rubber sheet 90x90x2mm cured for optimal (t90) time of the compound, at 160°C and 100bars of pressure. Five tensile dumbbells were tested and average results were determined.

Hardness Test: A hardness test was performed on the Zwick 3150 Shore A Hardness Tester according to DIN-53505 at 23°C. Samples were prepared from the same rubber sheet as used for the tensile test by stacking together five smaller rubber pieces. Five measurements were done per a compound and average of the results was taken.

Rebound test: Rebound measurements were done on the Zwick/Roell 5109 Rebound Resilience Tester by the standardized ISO4662 method at 23°C and 70°C. Cylindrical samples of 53 mm in diameter and 12.5 mm in thickness were cured at 170°C for 12 minutes.

LAT100 test: LAT100 wet grip measurements are carried out on a VMI LAT 100 tester. Distance is set to 33.2m right side only with speed of 0.5 km/h, load of 75N and slip angle 25°. The wheel samples with outside diameter of 80mm and inside diameter of 35mm were cured at 175°C for 10 minutes.

DMA Analysis: The dynamic measurements of the cured compounds were performed using a Metravib DMA +450 dynamic spectrometer in double shear mode. Samples were prepared as cylinders of 8 mm diameter and thickness of 2 mm cured at 170°C for 10 minutes. Samples were conditioned after vulcanization for 24 hours at room temperature. The dynamic measurements were conducted by a temperature sweep at constant frequency 10 Hz. A dynamic strain of 0.1% is applied for the temperature range -80°C to 25°C followed by a 6% strain for the temperature rage 25°C to 80°C. An increased dynamic strain at higher temperatures is more reliable for the rolling resistance prediction.

The above mentioned analysis of different parameters provided the following results which are shown below in Table 2.

**Table 2: Mechanical and physical properties of C1, I1 and I2**

| **TESTS** | **REF** | **I1** | **I2** |
|---|---|---|---|
| Contact angle at 23°C | 100 | 84 | 86 |
| Contact angle at 45°C | 101 | 102 | 101 |
| Hardness (Shore A) | 59 | 66 | 65 |
| Elongation at break (%) | 288.1 | 273.2 | 274.8 |
| Tensile strength MPa | 14.3 | 14.2 | 14.2 |

| **Dynamic properties** | | | |
|---|---|---|---|
| Rebound at 23°C | 47 | 41 | 42 |
| Rebound at 70°C | 64 | 60 | 61 |

Contact angle: Drop in contact angle indicates an increase in the hydrophilic nature of the compound. High contact angle at 45°C indicates a hydrophobic surface. A drop in contact angle in the modified rubber from 100 to 84 and 86 at 23 °C confirms a hydrophilic affect in the material due to the presence of the thermoresponsive polymer.

Tensile Test: Minimal differences in values between the compounds indicate similar wear resistance properties.

Hardness Test: An increased value from 59 to 66 and 65 was observed. This increase in hardness is due to the increased chain branching of the polymer system and improved interactions between the polar groups along the polymer chain and silica.

Rebound Test: A decreased value from 47 to 41 and 42 was indication of improved wet grip. A slight decrease in rebound from 64 to 60 and 61 at 70°C shows a slight increase in rolling resistance.

LAT100 (wet) Test: LAT100 indicated an improved wet grip between 4%-8% for the thermoresponsive rubber.

DMA Test: A decreased tan δ value is indicative of a slight reduction in wet grip properties. An increase of tan δ at 70°C shows a slight increase in rolling resistance.

The thermoresponsive features are only triggered in the presence of water. All other tests, except LAT100, show a reduction in rolling resistance tire performance properties. Wear resistance in both compounds are similar. The thermoresponsive compound shows stimuli-responsive features beneficial for tire tread by improving the wet grip feature on a LAT100 measurement.

## Claims

1. A cross-linkable rubber composition, the cross linkable rubber composition comprising:
- a first rubber component; and
- ≥ 5 phr to ≤ 75 phr of a grafted rubber, the grafted rubber comprising a backbone derived from a second rubber component and sidechains derived from a polymer being capable of exhibiting lower critical solution temperature (LCST) properties,
**characterised in that**
the grafted rubber comprises the polymer in a range of ≥ 12 wt-% to ≤ 15 wt-%, based on a total weight of 100 wt-% of the grafted rubber.

2. The cross linkable rubber composition of claim 1, wherein the first rubber component is selected from the group of solution polymerized styrene-butadiene rubber (SSBR), polybutadiene rubber (BR), or a mixture thereof.

3. The cross linkable rubber composition of claim 1 or 2, wherein the second rubber component is selected from the group of styrene-butadiene rubber (SBR), solution polymerized styrene-butadiene rubber (SSBR), emulsion polymerized styrene-butadiene rubber (ESBR), styrene-isoprene-styrene (SIS) rubber, polyisoprene (IR) rubber, natural polyisoprene rubber (NR), synthetic polybutadiene rubber (BR) or a mixture thereof.

4. The cross linkable rubber composition according to one of claims 1 to 3, wherein the polymer is selected from the group of poly(N-isopropylacrylamide), poly(N-cyclopropylacrylamide), poly(N,N-diethylacrylamide) or mixtures of these polymers.

5. The cross linkable rubber composition according to one of claims 1 to 4, wherein second rubber component is SSBR and the polymer is poly(N-isopropylacrylamide).

6. The cross linkable rubber composition according to one of claims 1 to 5, wherein the composition comprises, per hundred parts by weight of rubber (phr), ≥ 5 phr to ≤ 75 phr, preferably ≥ 25 phr to ≤ 75 phr, of the first rubber component.

7. The cross linkable rubber composition according to one of claims 1 to 6, wherein the composition comprises ≥ 25 phr to ≤ 75 phr of the grafted rubber.

8. A method of preparing a cross-linkable rubber composition according to one of claims 1 to 7, comprising the steps of:
- providing a first rubber component,
- adding a grafted rubber, the grafted rubber comprising a backbone derived from a second rubber component and sidechains derived from a polymer being capable of exhibiting lower critical solution temperature (LCST) properties,
- adding curing agents,
**characterized in that**,
the grafted rubber comprises the polymer in a range of ≥ 10 wt-% to ≤ 15 wt-%, based on a total weight of 100 wt-% of the grafted rubber.

9. A cross-linked rubber composition, **characterised in that** it is obtained by cross-linking a rubber composition according to one of claims 1 to 7.

10. The cross-linked rubber composition according to claim 9 with a tan delta at 0 °C of ≥ 0.18 to ≤ 0.3 (determined from dynamic mechanical analysis (DMA) measurements according to ISO 4664-1, frequency 10 Hz, 0.1% dynamic strain) and a tan delta at 60 °C of ≥ 0.2 to ≤ 0.25 (determined from dynamic mechanical analysis (DMA) measurements according to ISO 4664-1, frequency 10 Hz, 6 % dynamic strain).

11. A method of preparing a tire, comprising the steps of:
- providing a tire assembly comprising a rubber composition according to one of claims 1 to 7;
- cross-linking at least the rubber composition according to one of claims 1 to 7 in the tire assembly.

12. A tire comprising a tire tread, **characterised in that** the tire tread comprises a cross-linked rubber composition according to one of claim 9 or 10.

## Patentansprüche

1. Quervernetzbare Kautschukzusammensetzung, wobei die quervernetzbare Kautschukzusammensetzung umfasst:
- eine erste Kautschukkomponente; und
- ≥ 5 phr bis ≤ 75 phr eines gepfropften Kautschuks, wobei der gepfropfte Kautschuk eine Hauptkette, die sich von einer zweiten Kautschukkomponente ableitet, und Seitenketten, die sich von einem Polymer ableiten, das dazu befähigt ist, eine niedrigere kritische Lösungstemperatur (LCST, Lower Critical Solution Temperature) zu zeigen, umfasst,
**dadurch gekennzeichnet, dass**
der gepfropfte Kautschuk das Polymer in einem Bereich von ≥ 12 Gew.-% bis ≤ 15 Gew.-%, bezogen auf ein Gesamtgewicht des gepfropften Kautschuks von 100 Gew.-%, umfasst.

2. Quervernetzbare Kautschukzusammensetzung nach Anspruch 1, wobei die erste Kautschukkomponente ausgewählt ist aus der Gruppe aus lösungspolymerisierter Styrol-Butadien-Kautschuk (SSBR), Polybutadien-Kautschuk (BR) oder einer Mischung davon.

3. Quervernetzbare Kautschukzusammensetzung nach Anspruch 1 oder 2, wobei die zweite Kautschukkomponente ausgewählt ist aus der Gruppe aus Styrol-Butadien-Kautschuk (SBR), lösungspolymerisierter Styrol-Butadien-Kautschuk (SSBR), emulsionspolymerisierter Styrol-Butadien-Kautschuk (ESBR), Styrol-Isopren-Styrol(SIS)-Kautschuk, Polyisopren(IR)-Kautschuk, natürlicher Polyisopren-Kautschuk (NR), synthetischer Polybutadien-Kautschuk (BR) oder einer Mischung davon.

4. Quervernetzbare Kautschukzusammensetzung nach einem der Ansprüche 1 bis 3, wobei das Polymer ausgewählt ist aus der Gruppe aus Poly(N-isopropylacrylamid), Poly(N-cyclopropylacrylamid), Poly(N,N-diethylacrylamid) oder Mischungen dieser Polymere.

5. Quervernetzbare Kautschukzusammensetzung nach einem der Ansprüche 1 bis 4, wobei es sich bei der zweiten Kautschukkomponente um SSBR handelt und es sich bei dem Polymer um Poly(N-isopropylacrylamid) handelt.

6. Quervernetzbare Kautschukzusammensetzung nach einem der Ansprüche 1 bis 5, wobei die Zusammensetzung, pro hundert Gewichtsteile Kautschuk (phr), ≥ 5 phr bis ≤ 75 phr, vorzugsweise ≥ 25 phr bis ≤ 75 phr, der ersten Kautschukkomponente umfasst.

7. Quervernetzbare Kautschukzusammensetzung nach einem der Ansprüche 1 bis 6, wobei die Zusammensetzung ≥ 25 phr bis ≤ 75 phr des gepfropften Kautschuks umfasst.

8. Verfahren zur Herstellung einer quervernetzbaren Kautschukzusammensetzung nach einem der Ansprüche 1 bis 7, das folgende Schritte umfasst:
- Bereitstellen einer ersten Kautschukkomponente,
- Zugeben eines gepfropften Kautschuks, wobei der gepfropfte Kautschuk eine Hauptkette, die sich von einer zweiten Kautschukkomponente ableitet, und Seitenketten, die sich von einem Polymer ableiten, das dazu befähigt ist, eine niedrigere kritische Lösungstemperatur (LCST, Lower Critical Solution Temperature) zu zeigen, umfasst,
- Zugeben von Vernetzungsmitteln,
**dadurch gekennzeichnet, dass**
der gepfropfte Kautschuk das Polymer in einem Bereich von ≥ 10 Gew.-% bis ≤ 15 Gew.-%, bezogen auf ein Gesamtgewicht des gepfropften Kautschuks von 100 Gew.-%, umfasst.

9. Quervernetzte Kautschukzusammensetzung, **dadurch gekennzeichnet, dass** sie durch Quervernetzen einer Kautschukzusammensetzung nach einem der Ansprüche 1 bis 7 erhalten ist.

10. Quervernetzte Kautschukzusammensetzung nach Anspruch 9 mit einem Tangens-delta-Wert bei 0 °C von ≥ 0,18 bis ≤ 0,3 (bestimmt aus Dynamisch-Mechanische Analyse (DMA)-Messungen gemäß ISO 4664-1, Frequenz 10 Hz, 0,1 % dynamische Dehnung) und einen Tangens-delta-Wert bei 60 °C von ≥ 0,2 bis ≤ 0,25 (bestimmt aus Dynamisch-Mechanische Analyse (DMA)-Messungen gemäß ISO 4664-1, Frequenz 10 Hz, 6 % dynamische Dehnung).

11. Verfahren zur Herstellung eines Reifens, das folgende Schritte umfasst:
- Bereitstellen einer Reifenanordnung, die eine Kautschukzusammensetzung nach einem der Ansprüche 1 bis 7 umfasst;
- Quervernetzen mindestens der Kautschukzusammensetzung nach einem der Ansprüche 1 bis 7 in der Reifenanordnung.

12. Reifen mit einer Reifenlauffläche, **dadurch gekennzeichnet, dass** die Reifenlauffläche eine quervernetzte Kautschukzusammensetzung nach einem der Ansprüche 9 oder 10 umfasst.

## Revendications

1. Composition de caoutchouc réticulable, la composition de caoutchouc réticulable comprenant :
- un premier composant caoutchouc ; et
- ≥ 5 phr à ≤ 75 phr d'un caoutchouc greffé, le caoutchouc greffé comprenant un squelette issu d'un second composant caoutchouc et des chaînes latérales issues d'un polymère qui est susceptible de présenter des propriétés de température critique de solution moins élevées (LCST),
**caractérisée en ce que**
le caoutchouc greffé comprend le polymère en une plage de ≥ 12 % en poids à ≤ 15 % en poids, sur la base d'un poids total de 100 % en poids du caoutchouc greffé.

2. Composition de caoutchouc réticulable selon la revendication 1, dans laquelle le premier composant caoutchouc est choisi dans le groupe constitué par un caoutchouc styrène-butadiène polymérisé en solution (SSBR), un caoutchouc polybutadiène (BR), ou un mélange de ceux-ci.

3. Composition de caoutchouc réticulable selon la revendication 1 ou 2, dans laquelle le second composant caoutchouc est choisi dans le groupe constitué par un caoutchouc styrène-butadiène (SBR), un caoutchouc styrène-butadiène polymérisé en solution (SSBR), un caoutchouc styrène-butadiène polymérisé en émulsion (ESBR), un caoutchouc styrène-isoprène-styrène (SIS), un caoutchouc polyisoprène (IR), un caoutchouc polyisoprène naturel (NR), un caoutchouc polybutadiène synthétique (BR), ou un mélange de ceux-ci.

4. Composition de caoutchouc réticulable selon l'une des revendications 1 à 3, dans laquelle le polymère est choisi dans le groupe constitué par un poly(N-isopropylacrylamide), un poly(N-cyclopropylacrylamide), un poly(N,N-diéthylacrylamide), ou des mélanges de ces polymères.

5. Composition de caoutchouc réticulable selon l'une des revendications 1 à 4, dans laquelle le second composant caoutchouc est un SSBR et le polymère est un poly(N-isopropylacrylamide).

6. Composition de caoutchouc réticulable selon l'une des revendications 1 à 5, dans laquelle la composition comprend, pour cent parties en poids de caoutchouc (phr), ≥ 5 phr à ≤ 75 phr, de préférence ≥ 25 phr à ≤ 75 phr, du premier composant caoutchouc.

7. Composition de caoutchouc réticulable selon l'une des revendications 1 à 6, dans laquelle la composition comprend ≥ 25 phr à ≤ 75 phr du caoutchouc greffé.

8. Procédé de préparation d'une composition de caoutchouc réticulable selon l'une des revendications 1 à 7, comprenant les étapes de :
- fourniture d'un premier composant caoutchouc,
- ajout d'un caoutchouc greffé, le caoutchouc greffé comprenant un squelette issu d'un second composant caoutchouc et des chaînes latérales issues d'un polymère qui est susceptible de présenter des propriétés de température critique de solution moins élevées (LCST),
- ajout d'agents de durcissement,
**caractérisé en ce que**,
le caoutchouc greffé comprend le polymère en une plage de ≥ 10 % en poids à ≤ 15 % en poids, sur la base d'un poids total de 100 % en poids du caoutchouc greffé.

9. Composition de caoutchouc réticulée, **caractérisée en ce qu'**elle est obtenue par réticulation d'une composition de caoutchouc selon l'une des revendications 1 à 7.

10. Composition de caoutchouc réticulée selon la revendication 9, ayant un tan delta à 0 °C ≥ 0,18 à ≤ 0,3 (déterminé à partir de mesures d'analyse mécanique dynamique (DMA) selon la norme ISO 4664-1, fréquence 10 Hz, déformation dynamique 0,1 %) et un tan delta à 60 °C ≥ 0,2 à ≤ 0,25 (déterminé à partir de mesures d'analyse mécanique dynamique (DMA) selon la norme ISO 4664-1, fréquence 10 Hz, déformation dynamique 6 %).

11. Procédé de préparation d'un pneumatique, comprenant les étapes de :
- fourniture d'un ensemble pneumatique comprenant une composition de caoutchouc selon l'une des revendications 1 à 7 ;
- réticulation au moins de la composition de caoutchouc selon l'une des revendications 1 à 7 dans l'ensemble pneumatique.

12. Pneumatique comprenant une bande de roulement de pneumatique, **caractérisé en ce que** la bande de roulement de pneumatique comprend une composition de caoutchouc réticulée selon l'une parmi la revendication 9 ou 10.
